# EUROPEAN PATENT SPECIFICATION

(11) **EP 0 740 902 B1**
(45) Date of publication and mention of the grant of the patent: **28.03.2001**
(21) Application number: 96303112.5
(22) Date of filing: 02.05.1996
(51) Int. Cl.: A21C 3/02

(54) **Method and apparatus for stretching bread dough and the like**
Verfahren und Vorrichtung zum Ausstrecken von Teig oder dergleichen
Procédé et appareil pour l'étirage de pâte et similaires

(30) Priority: 02.05.1995 JP 13273095; 09.11.1995 JP 31721195
(43) Date of publication of application: 06.11.1996
(73) Proprietor: RHEON AUTOMATIC MACHINERY CO., LTD., Utsunomiya-shi Tochigi-ken (JP)
(72) Inventor: Hayashi, Torahiko, Utsunomiya-shi, Tochigi-ken (JP)
(74) Representative: Piésold, Alexander J.

(56) References cited:
- EP-A- 0 179 645
- NL-A- 7 714 214
- US-A- 4 178 147

## Description

This invention relates to a method and an apparatus for stretching highly elastic materials such as bread dough. More specifically, but not exclusively, this invention relates to a method of and an apparatus for producing high-quality bread by continuously stretching bread dough or the like that is supplied continuously by a conveyor to obtain thin sheet-like bread dough by using a vibratory conveying effect.

Molding elastic materials has before now only been made by subjecting the conventional materials to a stress that is above the yield point of the materials. In this case, however, the lost elasticity cannot be recovered of itself. Thus in producing foods, especially bread, that require elasticity as their important condition, a skilled manual operation has always been necessitated.

When bread is automatically produced by a machine, the elasticity of the material has always been impaired while the bread is made. Further, if the elasticity is lost even a little, it is difficult to produce bread having a taste that is the same as that of bread made by a skilled operator. By mixing potassium bromate and the like with the material as a chemical additive, the elasticity of the "membrane-forming function" was recovered by putting the molded dough material for a certain period under a stationary condition to recover the elasticity that was lost during the time the material was being molded by machines.

As is clear, the bread dough was stretched and molded either by wearing out the inherent elasticity of the dough, or by using a screw conveyor mechanism and the like. A twisting stress was exerted to the dough material to break the gluten's gel structure to deprive the material of its elasticity, and the elasticity was recovered by adding a chemical additive. However, when the bread made by bread-making machines is compared to manually prepared bread, it is seen that the former has an inferior taste and the solution of the problem by using a chemical additive was an unnatural approach.

To resolve the above problems, the present invention provides a method and an apparatus to produce bread dough by a machine without using the chemical additives that had been used when producing bread.

The "orbital stretching apparatus" referred to below as "a stretching apparatus using a circular orbit revolution," is disclosed in Japanese Patent Publication No. 63-54333 and Japanese Utility Early-Publication No. 47-13493. But these apparatuses do not have enough ability to thinly stretch dough bread having high elasticity.

The quality of the bread will be improved by removing the contained fermented gas due to the loss of the elasticity, which leads to the fracture of the gluten's network structure of the inner part of the bread. The problem arose by directly adding a shearing stress exerted by the opposite rollers used in the dough stretching operation to obtain sheet-like dough as conventionally made.

To remove the above disadvantages, acid additives such as potassium bromate or ascorbic acid were added to the dough material to enhance the gluten structure. The dough material in this case was molded as pieces by cutting separate pieces. By the present invention, it is not necessary to add chemical additives to the material and also it does not require a certain stationary (i.e. resting) period for the material.

As opposed to the prior art method and apparatus wherein the elasticity is broken, the present invention provides, at least in preferred forms, means to extend and stretch the dough materials to an extent that is below the yield point.

More specifically, a periodic strong vibration is exerted to the dough material by freely rotatable rollers that orbit along a circle. By using such a vibration, a temporary flow phenomenon in the dough, called "a thixotropy effect" will appear. By using the short period of time that occurs during this phenomenon, the bread dough is stretched to provide a thin sheet of bread material without breaking the gel structure of the dough, by not subjecting the dough to the so-called "tensile stress." The thus-obtained dough material is wound up in a bar shape of any continuously desired type. The rolled material is cut to a desired length to obtain small cut lengths of molded dough. Differing from the prior art wherein a small piece of bread was directly molded from a large block of the bread dough, the preferred embodiments of this invention provide a variety of bread that is equivalent to that which is manually made, without using the above additives.

The fluidity of the bread dough obtained by the thixotropy effects is recoverable, thus the thinly-stretched dough produced by at least the preferred embodiments of the present invention, when put in a stationary condition, recovers the original elasticity in a few minutes. Thus this differs from the prior art, wherein a forcible cutting operation is performed to mold dough by depriving the dough of its elasticity. Further, the use of the thixotropy effect used in the present invention does not at all damage the gluten structure in the bread dough. This invention provides a simple method and an apparatus to thinly stretch bread dough.

In one aspect of this invention, a rotating member having a number of freely rotatable planetary rollers around its periphery is provided. Bread dough is supplied to a conveying device having a plurality of rollers relative to the arcuate periphery defined by the planetary rollers. The conveyor's rollers are located below the planetary rollers. The space between the planetary rollers and the conveyer's rollers decreases in the downstream direction and the conveyor's rollers are made to be rotated so that the downstream ones are driven faster than the upstream ones. The bread dough being conveyed by the conveying device is repeatedly pressed and vibrated from above by the action of the rotating member. This brings about a thixotropy effect in the dough to temporarily enhance the fluidity of the dough. Thus it provides a great stretching effect. This is due to the difference in the rotating speed of the rollers of the conveying device.

According to a first aspect of the present invention, there is provided a method for stretching bread dough comprising the steps of
revolving a rotating member having a plurality of freely rotatable planetary rollers mounted on parallel shafts so that the rollers move around the circular periphery of the rotating member,
supplying the bread dough to a conveying device located spaced apart downwardly from the circular periphery of the rotating member, the conveying device having a plurality of rollers that rotate gradually faster from the inlet to the outlet of the conveying device, the plurality of rollers of the conveying device being arranged to form an arcuate path such that a curved space is formed between a portion of the circular periphery of the rotating member and the arcuate path of the conveying device, the curved space having an upstream end and a downstream end, the curved space becoming gradually narrower from the upstream end to the downstream end, and
stretching the bread dough into an elongated form while having the bread dough pass through the curved space to produce a thinly stretched bread dough.

According to a second aspect of the present invention, there is provided a dough stretching apparatus comprising
a rotating member having a plurality of planetary rollers mounted on parallel shafts, the planetary rollers being arranged to move along a circular path,
a conveying device comprising a plurality of rollers located below and spaced apart from the rotating member, the rollers being arranged to stretch the bread dough such that a curved space having an upstream end and a downstream end is formed between the circular path formed by a portion of the planetary rollers and an arcuate path formed by a portion of the rollers of the conveying device; wherein the curved space becomes gradually narrower from the upstream end to the downstream end of the curved space, and wherein a speed-setting device is provided for controlling the ratio between the speed of the planetary rollers and the speed of the conveying rollers so that the rotational speed of the conveying rollers increases toward the outlet in accordance with the narrowing curved space, so as to adjust the bread-dough stretching effect.

Preferably, when the bread dough passes the conveying device as the planetary rollers of the rotating member rotate, the dough located in the space is simultaneously stretched by the planetary rollers and the rollers of the conveying device at least at two points, to enhance the stretching effect. Further, the rotational speed of the roller positioned at the outlet of the conveying device is preferably faster than the speed of the discharge conveyor.

Preferred embodiments of the invention will now be described by way of example only, and with reference to the accompanying drawings, in which:-
Fig. 1 is an overall side view of one embodiment of the present invention;
Fig. 2 is a cross-sectional front view of the first embodiment;
Fig. 3 is a cross-sectional front view of a second embodiment of the present invention;
Fig. 4 is an explanatory view showing the function of the present invention; and
Fig. 5 is also an explanatory view showing the function of the present invention.

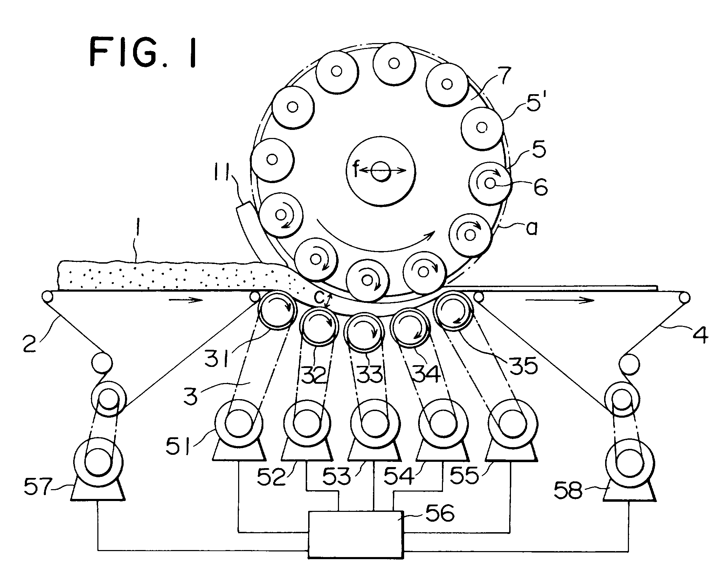

In the first embodiment, shown in Figure 1, a supply conveyor 2 to convey the bread dough 1 and a conveying device 3 positioned downstream of the supply conveyor are provided. The conveying device has a plurality of rollers 31-35. A discharge conveyor 4 is located adjacent the conveying device 3 and downstream of it.

Above the conveying device 3 is located a plurality of planetary rollers 5,5'... so that they can orbit along a circular path.

The planetary rollers 5,5' are freely and rotatably mounted to shafts 6 fixed to a wheel 7. The shafts 6 are opposite and parallel to the conveying device 3. Thus the planetary rollers 5,5' also move parallel to the conveying device.

The wheel 7 is fixed to a drive shaft 8 that is supported by a frame 12, and the wheel 7 is rotated by a motor 10 via a gear 9 mounted on the drive shaft 8.

A drive plate 11 is provided at a position above the supply conveyor 2 and the downstream end thereof, so that the outer periphery of the planetary rollers can contact the drive plate 11. This helps impart an initial rotation to the freely-rotatable planetary rollers.

The planetary rollers 5,5' thus rotated will move on the bread dough 1 causing it to be thinly stretched.

The rollers 31-35 of the conveying device 3 are located so that the distance C between the phantom circle as depicted by the planetary rollers 5,5' and the conveyor's rollers 31-35 decreases from the upstream roller 31 towards the downstream roller 35.

The rollers 31-35 are rotated by motors 51-55 through drive shafts so as to rotate toward the downstream direction.

The speed of each of motors 51-55 can be adjusted individually by an adjusting device 56 such as an inverter. Thus the rotational speed of the rollers 31-35 can be increased toward the outlet (in the dough-stretching direction).

In this embodiment the rollers 31-35 are made to rotate so that their rotational speed becomes faster toward the conveying direction. The increase of the rotational speed of the rollers 31-35 is made to be in inverse proportion to the decrease of the space C.

The extent of the decrease of the space C, namely, the rate of pressure, can be freely adjusted, as shown by the arrow f, by rotating a handle 18.

The speed of the supply conveyor 2 is determined to be the same as or less than that of the roller 31, and the speed of the discharge conveyor 4 is determined to be the same as or faster than that of the roller 35.

If, for instance, the space between the adjacent planetary rollers 5,5' is set to be twice as much as the space between the rollers 31-35 of the conveying device, the planetary rollers 5,5' will be located alternately in relation to the rollers 31-35, so that the generating lines of the planetary rollers 5,5' and the rollers 31-35 of the conveying device 3 are made to meet each other almost simultaneously.

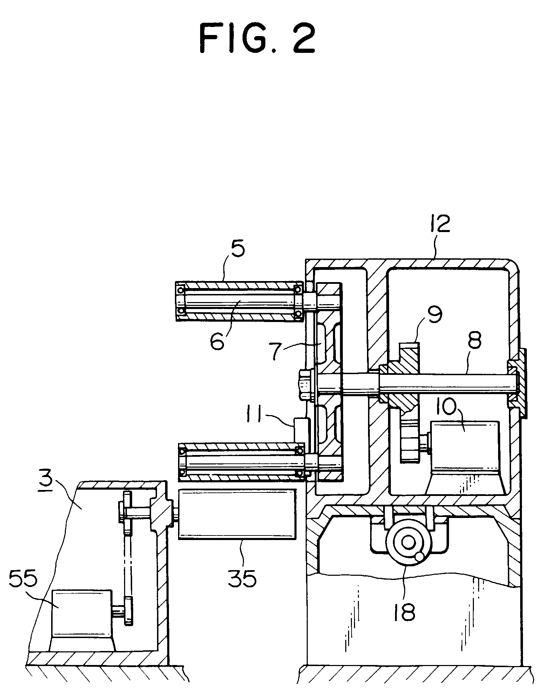

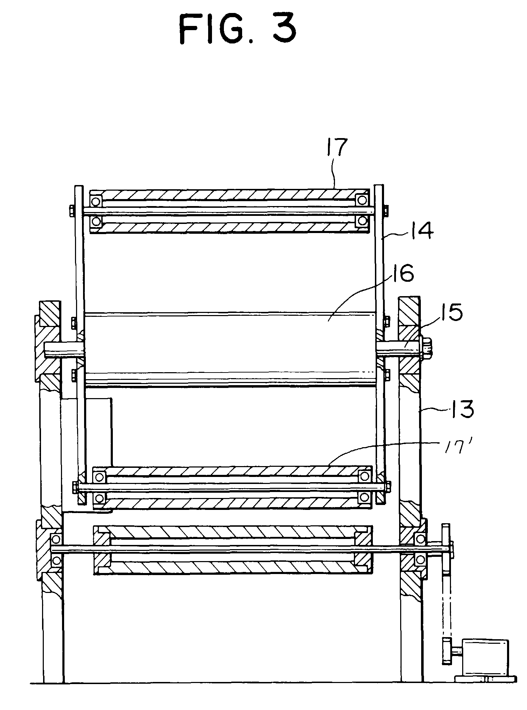

In the second embodiment, shown in Fig. 3, the planetary rollers 5,5' are supported, at either end of the rollers, as opposed to the structure of Fig. 2 wherein these rollers 5,5' are supported in a cantilever fashion.

A rotary wheel 14 is supported by a frame 13, and a motor pulley 16 is mounted on a main shaft 15 of the wheel 14.

The planetary rollers 17,17' ... revolve as the motor pulley 16 rotates.

The remaining structure will not be explained, as it is the same as that of the first embodiment.

The effect and function of the present invention are as follows:

The bread dough 1 conveyed by the upstream supply conveyor 2 is supplied to the conveying device 3 and is gripped between the group of the planetary rollers 5,5' that rotate at a high speed, and the conveying device 3. The bread dough is gradually stretched by rollers 31-35, and their rotational speed is made to be progressively faster to discharge the dough by the discharge conveyor 4.

The stretching effect will now be explained. When the freely rotating planetary rollers 5,5' ... pass above the rollers 31-35, a repeated pressing and releasing vibration is imparted to the bread dough, to generate a thixotropy effect. Thus the fluidity of the elastic dough that normally has a low fluidity becomes temporarily high.

The bread dough 1 thus produced, which is made to have a high fluidity, can easily be stretched due to the difference in the speed of the rollers 31-35.

The experiment showed that when the bread dough 1 received 1,000 beating actions per minute by the rollers 31-35 and the planetary rollers 5,5'... by setting the speed of the planetary rollers 5,5' ... as 30 and 70m per minute, the bread dough was easily and temporarily extended by the thixotropy effect and a stretching effect was obtained that was not realized by the prior art stretching method.

If the planetary rollers 5,5' and the rollers 31-35 press the bread dough at least simultaneously at two points by oppositely aligning the generating lines of the planetary rollers and the rollers 31-35, the speed difference at these two points of the stretching portion will further and effectively stretch the bread dough.

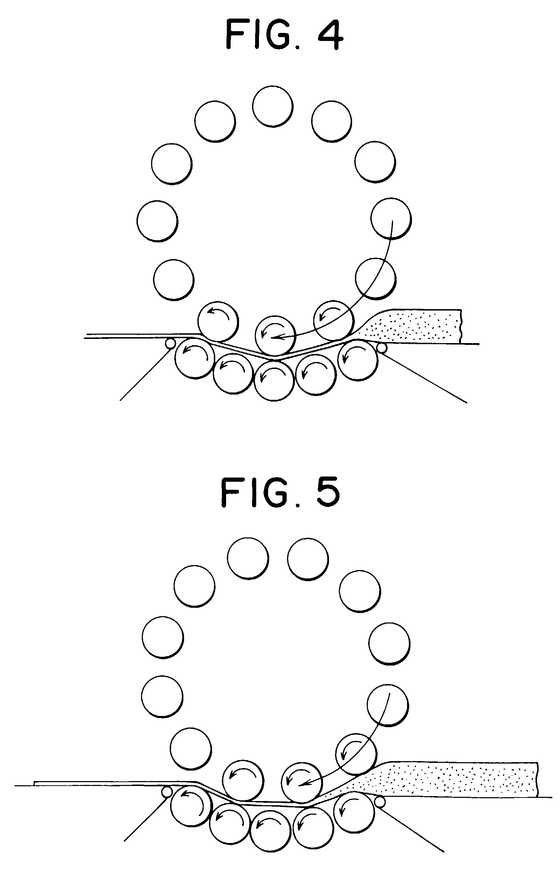

As shown in Figs. 4 and 5, the bread dough is stretched at two or three points in this stretching portion defined by the rollers 5,5' and rollers 31-35 and the stretching points repeatedly vary as the rollers 5,5' revolve.

Portions of the bread dough that are not stretched at these points are freely stretched without receiving external resistance and are repeatedly stretched in the stretching area.

Since the beating effect (thixotropy effect) can be freely adjusted by changing the rotational speed of the wheel 7, the stretching ratio and the desired production speed of the dough supplied can be adjusted.

In the present invention the bread dough is conveyed by a plurality of rollers 31-35. The planetary rollers 5,5' ... rotatably move on the upper surface linearly of the rollers 5,5' ..., so that no frictional stress is imparted to the bread dough, and the thixotropy effect is generated by a vibrating effect of a short frequency.

By this vibration the thixotropy effect is obtained in the bread dough 1, so that the dough easily flows and is stretched by the difference in speed of the rollers 31, 32, 33, 34 and 35 of the conveying device.

The drive plate 11 helps to initially and forcibly rotate the rollers 5,5' to give rotational inertia to the rollers to have them easily rotate on the upper surface of the bread dough. Thus the bread dough supplied to the roller 31 cannot be forcibly pulled by the planetary rollers 5,5' ...

In this embodiment it is explained that the rotational speed of the roller 35 and the speed of the discharge conveyor 4 are the same, or the speed of the discharge conveyor 4 is faster than the rotational speed of the roller 35. However, the bread dough, after it is stretched by the rollers 31-35, tends to shrink on the discharge conveyor 4 due to its inherent elasticity, so that it becomes difficult to produce bread dough having a desired thickness. To prevent such a phenomenon, and considering the shrinkage of the bread dough, the rotational speed of the roller 35 or 34 can be made to be faster than the conveying speed of the discharge conveyor 4. In this case the bread dough is greatly extended by the roller 35 or 34 to adjust the shrinkage of the stretched bread dough, so that dough of a desired thickness is obtained.

As explained above, when the bread dough is stretched, a temporary fluidity is given to it by the thixotropy effect, and at the same time, due to this thixotropy effect, the bread dough can be stretched under a low pressure.

By temporarily generating stretchability in the bread dough, the dough is fully extended by the speed difference of the rollers of the conveying device. A thin and continuous bread dough can be easily obtained under a low pressure without breaking the gluten structure of the bread dough.

In the prior-art bread-dough stretching method, a shearing stress was directly imparted to the bread dough by opposing rollers. This method broke the gluten structure in the bread dough, so that the dough lost elasticity and could not contain foam-like fermented gas. The above embodiments overcome this inferior quality bread dough.

## Claims

1. A method for stretching bread dough comprising the steps of
revolving a rotating member (7) having a plurality of freely rotatable planetary rollers (5,5'...) mounted on parallel shafts (6) so that the rollers move around the circular periphery of the rotating member,
supplying the bread dough to a conveying device (3) located spaced apart downwardly from the circular periphery of the rotating member (7), the conveying device (3) having a plurality of rollers (31-35) that rotate gradually faster from the inlet to the outlet of the conveying device (3), the plurality of rollers of the conveying device being arranged to form an arcuate path such that a curved space is formed between a portion of the circular periphery of the rotating member and the arcuate path of the conveying device, the curved space having an upstream end and a downstream end, the curved space becoming gradually narrower from the upstream end to the downstream end, and
stretching the bread dough into an elongated form while having the bread dough pass through the curved space to produce a thinly stretched bread dough.

2. A bread dough stretching apparatus comprising
a rotating member (7) having a plurality of planetary rollers (5,5'...) mounted on parallel shafts (6), the planetary rollers being arranged to move along a circular path, and
a conveying device (3) comprising a plurality of rollers (31-35) located below and spaced apart from the rotating member (7), the rollers being arranged to stretch the bread dough such that a curved space having an upstream end and a downstream end is formed between the circular path formed by a portion of the planetary rollers and an arcuate path formed by a portion of the rollers of the conveying device (3); characterized in that
the curved space becomes gradually narrower from the upstream end to the downstream end of the curved space, and in that
a speed-setting device (56) is provided for controlling the ratio between the speed of the planetary rollers (5,5'...) and the speed of the conveying rollers (31-35) so that the rotational speed of the conveying rollers increases toward the outlet in accordance with the narrowing curved space, so as to adjust the bread-dough stretching effect.

3. A bread dough stretching apparatus as claimed in claim 2, additionally comprising a supply conveyor (2) and a discharge conveyor (4), positioned at the inlet and outlet of the conveying device, respectively.

4. A bread dough stretching apparatus as claimed in claim 3, wherein the rotational speed of the roller (35) of the conveying device (3) that is positioned at the outlet of the conveying device (3) is slower than the speed of the discharge conveyor (4).

5. A bread dough stretching apparatus as claimed in any of claims 2 to 4, wherein the planetary rollers (5, 5'...) and the rollers of the conveying device (31-35) are located at least at two points so as to cause the planetary rollers and the rollers of conveying device to simultaneously face each other, to increase the stretching effect in the dough.

6. A bread dough stretching apparatus as claimed in any of claims 2 to 5 wherein vibrations are imparted to the dough supplied through the curved space, and wherein the number of the vibrations can be changed by varying the rotational speed of the rotating member (7), regardless of the conveying speed of the conveying device.

7. A bread dough stretching apparatus as claimed in any of claims 2, 3, 5 or 6, wherein the speed of the supplying conveyor (2) is the same as or less than that of the rotational speed of the upstream-end roller (31) of the conveying device (3), and the speed of the discharge conveyor (4) is the same as or less than that of the rotational speed of the downstream-end roller (35) of the conveying device (3).

## Patentansprüche

1. Verfahren zum Strecken von Brotteig, aufweisend die folgenden Schritte:
Drehen eines Drehglieds (7) mit einer Vielzahl von frei drehbaren Planetenwalzen (5, 5' ...), die an parallelen Wellen (6) angebracht sind, so daß sich die Walzen um den kreisförmigen Umfang des Drehglieds bewegen,
Zuführen des Brotteigs zu einer Fördervorrichtung (3), die sich mit einem Zwischenraum unterhalb des kreisförmigen Umfangs des Drehglieds (7) befindet, wobei die Fördervorrichtung (3) eine Vielzahl von Walzen (31-35) aufweist, die sich vom Einlaß der Fördervorrichtung (3) zu deren Auslaß hin allmählich schneller drehen, wobei die Vielzahl von Walzen der Fördervorrichtung so angeordnet sind, daß sie einen bogenförmigen Pfad bilden, so daß ein gebogener Raum zwischen einem Abschnitt des kreisförmigen Umfangs des Drehglieds und dem bogenförmigen Pfad der Fördervorrichtung gebildet wird, wobei der gebogene Raum ein stromaufwärtiges Ende und ein stromabwärtiges Ende aufweist und der gebogene Raum vom stromaufwärtigen Ende zum stromabwärtigen Ende allmählich enger wird, und
Strecken des Brotteigs in eine längliche Form, während der Brotteig durch den gebogenen Raum geführt wird, um einen dünn gestreckten Brotteig zu erhalten.

2. Brotteig-Streck-Einrichtung, aufweisend
ein Drehglied (7) mit einer Vielzahl von Planetenwalzen (5, 5' ...), die auf parallelen Wellen (6) angebracht sind, wobei die Planetenwalzen so angeordnet sind, daß sie sich entlang eines kreisförmigen Pfads bewegen, und
eine Fördervorrichtung (3), die eine Vielzahl von Walzen (31-35) aufweist, die sich unterhalb des und mit Zwischenraum zum Drehglied (7) befinden, wobei die Walzen derart angeordnet sind, daß sie den Brotteig so strecken, daß ein gebogener Raum mit einem stromaufwärtigen Ende und einem stromabwärtigen Ende zwischen dem von einem Abschnitt der Planetenwalzen gebildeten kreisförmigen Pfad und einem von einem Abschnitt der Walzen der Fördereinrichtung (3) gebildeten bogenförmigen Pfad gebildet ist; dadurch gekennzeichnet, daß
der gebogene Raum von dem stromaufwärtigen Ende zum stromabwärtigen Ende des gebogenen Raums allmählich enger wird, und
eine die Geschwindigkeit einstellende Vorrichtung (56) vorgesehen ist, um das Verhältnis zwischen der Geschwindigkeit der Planetenwalzen (5, 5' ...) und der Geschwindigkeit der Förderwalzen (31-35) so einzustellen, daß sich die Drehgeschwindigkeit der Förderwalzen zum Auslaß hin gemäß dem sich verengenden gebogenen Raum erhöht, um die Brotteig-Streckwirkung einzustellen.

3. Brotteig-Streck-Einrichtung nach Anspruch 2, zusätzlich aufweisend einen Zuführförderer (2) und einen Ausgabeförderer (4), die am Einlaß bzw. am Auslaß der Fördervorrichtung positioniert sind.

4. Brotteig-Streck-Einrichtung nach Anspruch 3, wobei die Drehgeschwindigkeit der Walze (35) der Fördervorrichtung (3), die am Auslaß der Fördervorrichtung (3) positioniert ist, langsamer ist als die Geschwindigkeit des Ausgabeförderers (4).

5. Brotteig-Streck-Einrichtung nach einem der Ansprüche 2 bis 4, wobei sich die Planetenwalzen (5, 5' ...) und die Walzen der Fördervorrichtung (31-35) zumindest an zwei Punkten befinden, um die Planetenwalzen und die Walzen der Fördervorrichtung zu veranlassen, sich gleichzeitig einander gegenüberzuliegen, um die Streckwirkung im Teig zu erhöhen.

6. Brotteig-Streck-Einrichtung nach einem der Ansprüche 2 bis 5, wobei dem durch den gebogenen Raum zugeführten Teig Vibrationen erteilt werden, und wobei die Anzahl der Vibrationen durch Variierung der Drehgeschwindigkeit des Drehglieds (7) unabhängig von der Fördergeschwindigkeit der Fördervorrichtung geändert werden kann.

7. Brotteig-Streck-Einrichtung nach einem der Ansprüche 2, 3, 5 oder 6, wobei die Geschwindigkeit des Zuführförderers (2) gleich oder geringer ist als die Drehgeschwindigkeit der Walze (31) am stromaufwärtigen Ende der Fördervorrichtung (3), und die Geschwindigkeit des Ausgabeförderers (4) gleich oder geringer ist als diejenige der Walze (35) am stromabwärtigen Ende der Fördervorrichtung (3).

## Revendications

1. Procédé pour étirer de la pâte à pain, comprenant les étapes dans lesquelles
on fait tourner un élément rotatif (7) ayant une pluralité de rouleaux planétaires (5, 5'...) pouvant tourner librement, montés sur des axes parallèles (6), de manière que les rouleaux se déplacent le long de la périphérie circulaire de l'élément rotatif,
on amène de la pâte à pain à un dispositif de transport (3) placé de façon à être espacé vers le bas de la périphérie circulaire de l'élément rotatif (7), le dispositif de transport (3) ayant une pluralité de rouleaux (31-35) qui tournent progressivement plus vite de l'entrée vers la sortie du dispositif de transport (3), la pluralité de rouleaux du dispositif de transport étant agencée de façon à former un trajet incurvé afin qu'un espace courbe soit formé entre une partie de la périphérie circulaire de l'élément rotatif et le trajet incurvé du dispositif de transport, l'espace courbe ayant une extrémité d'amont et une extrémité d'aval, l'espace courbe devenant progressivement plus étroit de l'extrémité d'amont vers l'extrémité d'aval, et
on étire la pâte à pain en une forme allongée en même temps qu'on fait passer la pâte à pain dans l'espace courbe pour produire de la pâte à pain finement étirée.

2. Appareil d'étirage de pâte à pain comportant
un élément rotatif (7) ayant une pluralité de rouleaux planétaires (5,5'...) montés sur des axes parallèles (6), les rouleaux planétaires étant agencés de façon à se déplacer le long d'un trajet circulaire, et
un dispositif de transport (3) comportant une pluralité de rouleaux (31-35) placés au-dessous et à distance de l'élément rotatif (7), les rouleaux étant agencés de façon à étirer la pâte à pain afin qu'un espace courbe ayant une extrémité d'amont et une extrémité d'aval soit formé entre le trajet circulaire formé par une partie des rouleaux planétaires et un trajet incurvé formé par une partie des rouleaux du dispositif de transport (3) ; caractérisé en ce que
l'espace courbe devient progressivement plus étroit de l'extrémité d'amont vers l'extrémité d'aval de l'espace courbe, et en ce que
un dispositif (56) de réglage de vitesse est prévu pour commander le rapport entre la vitesse des rouleaux planétaires (5,5'...) et la vitesse des rouleaux de transport (31-35) afin que la vitesse de rotation des rouleaux de transport augmente vers la sortie conformément à l'espace courbe devenant plus étroit, afin d'ajuster l'effet d'étirage de la pâte à pain.

3. Appareil d'étirage de pâte à pain selon la revendication 2, comportant additionnellement un transporteur d'alimentation (2) et un transporteur de décharge (4), positionnés respectivement à l'entrée et à la sortie du dispositif de transport.

4. Appareil d'étirage de pâte à pain selon la revendication 3, dans lequel la vitesse de rotation du rouleau (35) du dispositif de transport (3) qui est positionné à la sortie du dispositif de transport (3) est inférieure à la vitesse du transporteur (4) de décharge.

5. Appareil d'étirage de pâte à pain selon l'une quelconque des revendications 2 à 4, dans lequel les rouleaux planétaires (5,5'...) et les rouleaux du dispositif de transport (31-35) sont placés au moins en deux points de façon à amener les rouleaux planétaires et les rouleaux du dispositif de transport à être simultanément face à face, afin d'augmenter l'effet d'étirage dans la pâte.

6. Appareil d'étirage de pâte à pain selon l'une quelconque des revendications 2 à 5, dans lequel des vibrations sont communiquées à la pâte amenée à travers l'espace courbe, et dans lequel le nombre des vibrations peut être modifié en faisant varier la vitesse de rotation de l'élément rotatif (7), indépendamment de la vitesse de transport du dispositif de transport.

7. Appareil d'étirage de pâte à pain selon l'une quelconque des revendications 2, 3, 5 ou 6, dans lequel la vitesse du transporteur d'alimentation (2) est égale ou inférieure à la vitesse de rotation du rouleau (31) de l'extrémité d'amont du dlspositif de transport (3), et la vitesse du transporteur (4) de décharge est égale ou inférieure à la vitesse de rotation du rouleau (35) de l'extrémité d'aval du dispositif de transport (3).
